# EUROPEAN PATENT APPLICATION

(11) **EP 1 321 183 A1**
(43) Date of publication of application: **25.06.2003**
(21) Application number: 01204735.3
(22) Date of filing: 07.12.2001
(51) Int. Cl.: B01J 19/00

(54) **Reaction vessel containing a liner**

(71) Applicant: Avantium International B.V., 1014 BV Amsterdam (NL)
(72) Inventor: Nagy, Anton John, 1016 VX Amsterdam (NL)
(74) Representative: Mertens, Hans Victor

(57) **Abstract**

The present invention relates to a reaction vessel (1), at least comprising:
- a pressure resistant outer vessel (2);
- an inert inner vessel (3) lining the inside of the outer vessel (2), said inert inner vessel (3) being inert and resistant to the material to be contained in the reaction vessel;
- one or more openings (4) connecting the inside of the inner vessel (3) with the environment, characterized in that the reaction vessel (4) comprises:
   - sealing means (5), surrounding the one or more openings (4), preventing substantially any fluid connection from the inside of the inner vessel (3) to between the inner vessel (3) and the outer vessel (2).

## Description

The present invention relates to a reaction vessel at least comprising:
- a pressure resistant outer vessel;
- an inert inner vessel lining the inside of the outer vessel, said inert inner vessel being inert and resistant to the material to be contained in the reaction vessel; and
- one or more openings connecting the inside of the inner vessel with the environment.

Reaction vessels of the above kind, i.e. containing an inner vessel as a liner, are known from practice. E.g. chemically resistant liners are used to avoid contamination of the inside of the pressure resistant outer vessel of the reaction vessel in general, and more particularly to prevent the pressure resistant part of the reaction vessel from coming into direct contact with corrosive liquids. The liner contains the liquids and is itself contained inside the reactor vessel. The liner with its contents may be quickly removed, if desired, and replaced by an other liner, without the necessity of cleaning the outer vessel.

A problem that is encountered with known reaction vessels is that, especially when the reaction vessel is used at elevated temperatures and pressures, the material in the liner produces vapours which may leave the liner and condense between the liner and the pressure resistant outer vessel. This problem is especially pertinent when a hot reaction vessel is cooled. Usually, cooling of the reactor (after reaction) is effected from outside. This results in the outer vessel walls being cooled faster than the reaction mixture contained in the inner vessel. The decreasing temperature gradient from the liquid inside the inner vessel to the outer vessel provides a driving force for the transport of condensable vapour from the inside of the inner vessel to the outside of the inner vessel, and from here to the space between the inner vessel and the outer vessel. This ultimately results in the condensation of condensable vapour in the space between the inner vessel and the outer vessel. The effect of the cooling is thus that a reactant or product in liquid form may come between the pressure resistant outer vessel and the inert inner vessel, resulting in contamination, or worse, in corrosion of the pressure resistant outer vessel. Also, reactants or products may be lost.

Further, the occurrence of condensation between the inner vessel and outer vessel is disadvantageous, as this may impair the temperature control in the reaction vessel.

Therefore it is an object of the present invention to avoid the above and other problems and to provide a reaction vessel in which the occurrence of contamination and/or corrosion of the pressure resistant outer vessel can be prevented or at least minimised.

A further object of the present invention is to prevent the occurrence of condensation between the inert inner vessel and pressure resistant outer vessel.

The above objects can be achieved by the reaction vessel according to the present invention, the reaction vessel at least comprising:
- a pressure resistant outer vessel;
- an inert inner vessel lining the inside of the outer vessel, said inert inner vessel being inert and resistant to the material to be contained in the reaction vessel;
- one or more openings connecting the inside of the inner vessel with the environment, characterized in that the reaction vessel comprises:
   - sealing means, surrounding the one or more openings, preventing substantially any fluid connection from the inside of the inner vessel to between the inner vessel and the outer vessel.

It has been surprisingly found that the reaction vessel according to the present invention allows the use of fragile, inert lining inner vessels, even for high pressure applications and prevents or at least minimises the contact of corrosive reactants/product vapours with the reactor walls.

Further, the reaction vessel according to the present invention prevents or at least minimises the occurrence of condensation between the inert inner vessel and pressure resistant outer vessel.

A further advantage of the reaction vessel of the present invention is that a thermal conducting paste, liquid or solid may be placed between the liner and the outer vessel to improve thermal conduction. The use of the sealing means prevents any vapour produced by the thermal conducting material from contaminating the contents of the inner vessel.

As a pressure resistant outer vessel any suitable material may be used, providing for pressure resistance. Usually, a metal will be used such as stainless steel or aluminum.

For the inert inner vessel (i.e. 'liner') any suitable material may be used as long as the material is inert, gas tight, liquid tight and resistant to the material to be contained therein. Usually, the inert inner vessel will be made from glass, plastic or metal, depending on the conditions and the reactants used.

The reaction vessel may comprise one or more openings connecting the inside of the inner vessel with the environment. In most cases the reaction vessel will be operated at elevated temperatures and pressures, wherein the reaction vessel comprises only one opening. The person skilled in the art will however readily understand that also two or more openings may be present, if desired.

As sealing means any means may be used providing for the prevention of substantially any fluid connection from the inside of the inner vessel to between the inner vessel and the outer vessel.

According to a first preferred embodiment of the reaction vessel of the present invention, the sealing means are placed between the outer vessel and the inner vessel,

In this embodiment the sealing means may be O-rings. Such 0-rings are not limited to a substantially circular cross-sectional form, but can have any suitable form for sealing, as will be well understood by a person skilled in the art. Further, the 0-rings can be made from any suitable material such as metal or an elastomer. Instead of 0-rings the sealing means may have any other suitable form known to the person skilled in the art. For example, multiple layers of tape or V-shaped metal rings may also be used.

According to a preferred embodiment of the reaction vessel according to the present invention, the sealing means are designed to hold only a limited amount of pressure to provide for an equilibrium of the pressure on either side of the liner. By leaking above a certain pressure, it is possible to introduce gas from outside to the reactants contained in the inner vessel at high pressures without the liner breaking. The sealing means between the outer vessel and the inner vessel leaks this gas to the space between the inner vessel and the outer vessel, equilibrating the pressure on either side of the inner vessel. In this case the inner vessel may therefore be constructed of mechanically weak or brittle materials such as polymer and glass, as the liner does not have to resist pressures higher than the intrinsic vapour pressure of the reactants contained in the inner vessel at the reaction temperature. It has been found that good results are obtained when the sealing means between the outer vessel and the inner vessel is designed to resist a pressure of 10 bar.

Note that the gas, which should be allowed to leak between the inner vessel and the outer vessel is not vapour resulting from evaporation of the liquid contained within the inner liner. The seal between the inner vessel and outer vessel should only leak if a permanent gas (like hydrogen or air) for reaction is added. Hydrogenation reactions, for example, may take place at high pressure (> 100 bar). It is desirable, therefore, that the hydrogen leaks to the space between the inner vessel and outer vessel until a small pressure difference between the inner vessel and outer vessel is created. This small pressure difference is essentially the vapour pressure of the liquid component, and this is the pressure to be contained by the sealing means.

Preferably the outer vessel of the reaction vessel comprises a flange at or adjacent to one or more of the openings.

Herewith an easy sealing, especially of a reaction vessel having only one opening at one end, may be obtained. Also a surprisingly simple sealing of a plurality of parallel reaction vessels may be obtained. The person skilled in the art will understand that for obtaining a simple sealing of one or more reaction vessels, instead of a flange, also other means may be used. For example, the outer vessel may be provided with a threaded screw fitting, whereby the reaction vessel may be screwed into a top plate or lid.

According to a second preferred embodiment of the reaction vessel of the present invention, the outer vessel comprises a flange at or adjacent to one or more of the openings, and the sealing means form part of the inner vessel, such that the sealing means also at least partially line the flange.

Herewith no 0-rings or the like are necessary to prevent fluid from entering the space between the inner vessel and the outer vessel. This embodiment is in particular suitable for low pressure applications.

Preferably, the inner vessel of the second embodiment of the reaction vessel is at least partially made from a flexible material, to enable a simple, simultaneous sealing of the space between the inner vessel and the outer vessel, and also the inside of the inner vessel from the environment. More preferably, the flexible material is a compressible material, preferably selected from the group consisting of Teflon, PTFE, FEP, polypropylene, PET, nylon, polysulfides and other elastomers.

It is preferred that the inner vessel is removable from the outer vessel. Herewith one type of pressure resistant outer vessel may be used for all applications while a suitable inner vessel may be selected and inserted into the outer vessel, depending on the conditions and reactants to be used.

In a further aspect the present invention relates to an apparatus, in particular suitable for high throughput experimentation, comprising at least one reaction vessel according to the present invention.

Hereinafter the present invention will be illustrated in more detail by a drawing. Herein shows:
Figure 1 a schematic cross-sectional view of a first embodiment of a reaction vessel according to the present invention;
Figure 2 a schematic cross-sectional view of a plurality of parallel reaction vessels according to Figure 1; and
Figure 3 a schematic cross-sectional view of a second embodiment fo a reaction vessel of the present invention.

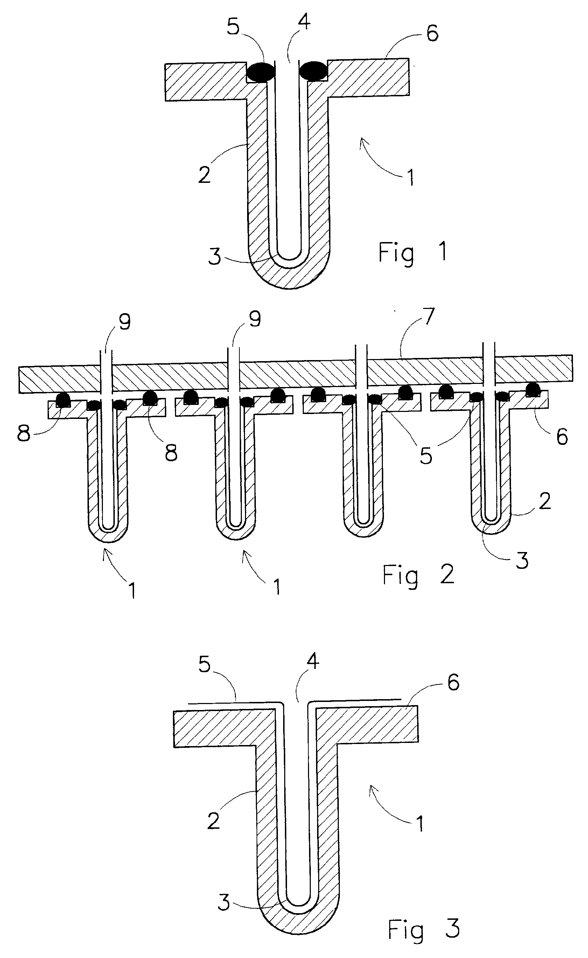

Figure 1 shows a schematic cross-sectional view of a, preferably tubular, reaction vessel 1 comprising a pressure resistant outer vessel 2 and a inert inner vessel 3. The inner vessel 3 is contained within the outer vessel 2 and lines the inside of the outer vessel 2. The inert inner vessel 3 is chosen such that it is resistant to the materials to be contained therein. The reaction vessel 1 comprises, in the shown embodiment, only one opening 4 connecting the inside of the inner vessel 3 with the environment. Further the reaction vessel comprises sealing means 5, such as an O-ring, between the outer vessel 2 and the inner vessel 3, surrounding the opening 4. Using the sealing means 5 substantially any fluid connection from the inside of the inner vessel 3 to between the inner vessel 3 and the outer vessel 2 is prevented. The person skilled in the art will understand that in Fig. 1 the space between the outer vessel 2 and inner vessel 3 is exaggerated.

Further the reaction vessel 1 comprises a flange 6 in the vicinity of opening 4. Herewith an easy sealing of the reaction vessel 1 may be obtained, especially when several reaction vessels 1 are used in parallel as will be illustrated in Fig. 2.

The persons skilled in the art will readily understand that other or additional sealing means may be provided.

As can be seen in figure 1, the inner vessel 3 may be easily removed from the outer vessel 2 and may, if desired, be exchanged for an inner vessel made of a different material.

Figure 2 shows a schematic cross-sectional view of a plurality of parallel reaction vessels 1 as described in Figure 1. On top of the reaction vessels 1 a cover element 7 is placed to simultaneously seal the reaction vessels 1. Also further sealing means 8 are provided to prevent undesired fluid leakage between the inside of the outer vessel 2 and the environment via a leak along the flange 6 or other sealing means.

The cover element 7 is provided with a sealable inlet 9 for a gas, e.g. to build up a high pressure in the reaction vessel 1.

The person skilled in the art will understand that many modifications may be made. For example, an assembly such as a rack or a reaction block, for housing the reaction vessels 1 may be provided. Also grooves may be provided in the flange 6 and/or the side wall of the outer vessel 2 as is shown in Fig. 2, for at least partial incorporation of the sealing means 8 and 5. Further, stirring means (magnetic or overhead) such as an orbital shaker, multiple inlets and outlets, and various sensors may be included, if desired, optionally via sealable connections in the cover element 7.

Also, as is mentioned above, the sealing means 5 may, if a gas such as N₂ is added via inlet 9, be designed such that they leak above a certain pressure, to equilibrate the pressure on either side of the inner vessel 3. In that case, the inner vessel 3 may be constructed of relatively mechanically weak or brittle materials. In this respect it is noted that it is not the condensable vapour resulting from evaporation of the liquid contained in the inner vessel 3 which leaks (as this would possibly result in corrosion of the outer vessel 2) but the gas fed by inlet 9.

The present invention allows the use of fragile inner vessels even for high pressure applications and prevents the contact of corrosive reactant/product vapour from contacting the walls of the pressure resistant outer vessel. A further advantage of the reaction vessel of the present invention is that a thermal conducting paste, liquid or solid may be placed between the liner and the outer vessel to improve thermal conduction. The use of the sealing means prevents any vapour produced by the thermal conducting material from contaminating the contents of the inner vessel.

Figure 3 shows a schematic cross-sectional view of a second embodiment of the reaction vessel of the present invention. The preferably tubular reaction vessel 1 comprises a pressure resistant outer vessel 2 and a inert inner vessel 3, which inner vessel 3 is contained within the outer vessel 2 and lines the inside of the outer vessel 2. At least the upper portion of the inert inner vessel 3, e.g. the part lining the flange 6 is, in this embodiment, made from a flexible material, such as Teflon. The reaction vessel 1 further comprises a flange 6 in the vicinity of opening 4. The inner vessel 3 is designed such that it also at least partially lines the flange 6. Therefore the inner vessel 3 also functions as sealing means for sealing the inside of the inner vessel 3 from the environment. To this end, a cover element similar to the embodiment described in Figure 2 may be used.

Again, the inner vessel 3 may be easily removed from the outer vessel 2 and may, if desired, be exchanged for an other vessel 3 containing a different material to be treated or reacted therein or for an inner vessel made of a different material.

## Claims

1. Reaction vessel (1), at least comprising:
- a pressure resistant outer vessel (2);
- an inert inner vessel (3) lining the inside of the outer vessel (2), said inert inner vessel (3) being inert and resistant to the material to be contained in the reaction vessel;
- one or more openings (4) connecting the inside of the inner vessel (3) with the environment, **characterized in that** the reaction vessel (1) comprises:
- sealing means (5), surrounding the one or more openings (4), preventing substantially any fluid connection from the inside of the inner vessel (3) to between the inner vessel (3) and the outer vessel (2).

2. Reaction vessel according to claim 1, wherein the sealing means (5) are placed between the outer vessel (2) and the inner vessel (3).

3. Reaction vessel according to claim 1 or 2, wherein the outer vessel (2) comprises a flange (6) at or adjacent to one or more of the openings (4).

4. Reaction vessel according to claim 1, wherein the outer vessel (2) comprises a flange (6) at or adjacent to one or more of the openings (4), and wherein the sealing means (5) form part of the inner vessel (3), such that the sealing means (5) also at least partially line the flange (6).

5. Reaction vessel according to claim 4, wherein the sealing means (5) are, at least partially, made from a flexible material.

6. Reaction vessel according to claim 5, wherein the flexible material is a compressible material such as Teflon.

7. Reaction vessel according to any of the preceding claims, wherein the inner vessel (3) is removable from the outer vessel (2).

8. Apparatus, in particular suitable for high throughput experimentation, comprising at least one reaction vessel (1) according to one or more of the preceding claims.
